# EUROPEAN PATENT SPECIFICATION

(11) **EP 4 261 169 B1**
(45) Date of publication and mention of the grant of the patent: **27.03.2024**
(21) Application number: 23153280.5
(22) Date of filing: 25.01.2023
(51) Int. Cl.: B65H 75/22, B65H 75/24

(54) **CABLE REEL**
KABELTROMMEL
BOBINE DE CÂBLE

(30) Priority: 15.04.2022 IT 202200007622
(43) Date of publication of application: 18.10.2023
(73) Proprietor: Prysmian S.p.A., 20126 Milano (IT)
(72) Inventor: Paddick, Nathan, Southampton (GB); Roberts, Kris, Southampton (GB)
(74) Representative: Praxi Intellectual Property Milano

(56) References cited:
- JP-A- H07 228 429
- JP-U- S62 133 577
- US-A- 3 565 363
- US-A- 4 895 316
- US-A- 5 575 437
- US-A- 5 971 317
- US-A1- 2011 101 153

## Description

### BACKGROUND

### Technical field

The present invention relates to a cable reel, particularly an expandable and reusable cable reel for packing and transporting cables, such as, for example, fiber drop cables.

### Description of the Related Art

Optical cables or small sized electrical cables, which need to be packed and transported in coils, are in general wound on reels. For example, drop cables to be installed in a premise (such as a house or an apartment) or externally to a premise to be connected to the main fibre network are usually wound and transported on reels, typically wooden reels, to aid installation. Cable lengths are often significantly different, so different size reels are required. Accordingly, shipment costs have to be incurred when using bulky and heavy reels. Furthermore the reels are not reused and often thrown away, mainly because of volume and/or weight of empty reels in a possible return shipment, which is not sustainable.

US 5,575,437 A discloses a knockdown reel comprising a two-part tubular hub and having a pair of end flanges releasably attached to opposite ends of the tubular hub by latching means capable of being released in order to separate the end flanges from the hub. The two parts of the tubular hub includes complementary tabs to be interlocked together. The tubular hub has fingers interlocking the flanges.

US 3,565,363 A describes a takedown reel comprising a pair of substantially identical rectangular resilient drum-forming plates, a pair of parallel hinges connecting opposite edges of one plate with the corresponding opposite edges of the other plate. The reel is formed by bending the drum-forming plates in the drum form and fitting the flanges at longitudinally opposite ends of the drum while allowing folding of the reel into a compact form by separating the drum from the flanges and flattening the drum plates.

US 2009/0008494 A1 discloses an expandable reel including two parts. Each part is formed by a core and a flange secured to the core. The first and second cores are threadably engageable with each other for thereby drawing the flanges together toward each other to form a spool with the unpackaged coil of wire retained between the flanges.

US 6,241 ,181 B1 discloses a reusable spool for use in installing electrical wiring. The spool includes first and second mating halves, each having an end plate and a central mandrel. The mandrel of one half may be inserted into a wound coil of wire, which can then be overturned to allow the second half to be connected to the first half. The first and second halves are joined through a plurality of arcuate longitudinal tabs which slidably engage in one position to adjust width and, upon rotation, lock frictionally into a given position.

US 4 895 316 A discloses a cable reel according to the preamble of claim 1.

### SUMMARY OF THE INVENTION

The invention therefore aims at providing an alternative cable reel which can be reused after a cable is installed, irrespective of the cable length, and which can be easily dismounted and transported.

This aim is achieved by a cable reel which is both longitudinally and circumferentially modular. The longitudinal modularity allows using the reel for cables having different lengths, whereas the circumferential modularity allows dismounting the reel and packing parts thereof saving space during transportation.

Accordingly, the present invention relates to a cable reel comprising:
- a tubular main body extending along a longitudinal axis, comprising a plurality of tubular sections successively arranged side by side along the longitudinal axis and releasably interconnected one to another;
- a first flange positioned at a first end of the main body, releasably connected to a first tubular section of the plurality of tubular sections;
- a second flange positioned at a second end of the main body, releasably connected to a last tubular section of the plurality of tubular sections,
wherein each tubular section comprises at least two arcuate elements releasably interconnected in circumferential direction.

In an embodiment, all the arcuate elements of all the tubular sections have the same shape and the same dimension and are stackable.

In an embodiment:
- the tubular sections comprise first longitudinal fasteners and second longitudinal fasteners, the first and the second longitudinal fasteners being differently shaped;
- the first flange and the second flange comprise first flange-fasteners and second flange-fasteners, the first flange-fasteners and the second flange-fasteners being differently shaped,
wherein the first longitudinal fasteners are suitable for the releasable connection in longitudinal direction with the second longitudinal fasteners and with the first flange-fasteners, and the second longitudinal fasteners are suitable for the releasable connection with the first longitudinal fasteners and with the second flange-fasteners.

In an embodiment, the first longitudinal fasteners are unsuitable for the connection with the second flange-fasteners, and the second longitudinal fasteners are unsuitable for the connection with the first flange-fasteners.

In an embodiment, the first longitudinal fasteners are positioned on a first longitudinal side of each tubular section and the second longitudinal fasteners are positioned on a second longitudinal side of each tubular section. In some embodiments, each arcuate element comprises both the first and the second longitudinal fasteners. In another embodiment, each tubular section includes at least a first and a second longitudinal fastener on the first longitudinal side and at least a first and a second longitudinal fastener on the second longitudinal side.

In an embodiment, the first flange comprises the first flange-fasteners and the second flange comprises the second flange-fasteners. In another embodiment, each of the first and second flange includes at least a first flange-fastener and a second flange-fastener.

In an embodiment, the first longitudinal fasteners and the second longitudinal fasteners, the first flange-fasteners and the second flange-fasteners comprise snap-fits.

In an embodiment, the first longitudinal fasteners comprise a cantilever snap-fit having a cantilever beam with a tapered hook, and the second longitudinal fasteners comprise an axially protruding wall having a slit, wherein the slit of the second longitudinal fasteners is releasably engageable by the tapered hook of the first longitudinal fasteners.

In an embodiment, the first flange-fasteners comprise an axially protruding wall having a slit, wherein the slit of the first flange-fasteners is releasably engageable by the tapered hook of the first longitudinal fasteners.

In an embodiment, the second flange-fasteners comprise a circumferential slit where the axially protruding wall of the second longitudinal fasteners is insertable, and a cantilever snap-fit having a cantilever beam with a tapered hook, wherein the slit of the second longitudinal fasteners is releasably engageable by the tapered hook of the second flange-fasteners.

In an embodiment, the first and the second flanges are reversibly couplable in a non-working configuration.

In an embodiment, the first flange comprises auxiliary slits where the cantilever beam of the second flange-fasteners can be inserted from the outer side of the first flange such that the hook of the second flange-fasteners engages the slit of the first flange-fasteners for reversibly coupling the first and the second flanges in the non-working configuration.

In an embodiment, the first and/or the second flanges comprise on their inner side an annular space for the insertion of the nearest main body tubular section of the plurality of tubular sections, wherein the annular space is further suitable for the insertion of stacked main body arcuate elements in the non-working configuration.

In an embodiment, each tubular section comprises one or more axial pins on one longitudinal side and one or more axial holes on the other longitudinal side, wherein the axial pins are reversibly insertable into the axial holes, and the first and the second flanges comprise axial holes/axial pins reversibly couplable with the axial pins /axial holes of the main body tubular sections.

In an embodiment, the arcuate elements comprise first circumferential fasteners and second circumferential fasteners, wherein the first circumferential fasteners and the second circumferential fasteners are suitable for the releasable interconnection in circumferential direction, wherein the first and the second circumferential fasteners comprise snap-fits.

In an embodiment, each arcuate element of each tubular section comprises the first circumferential fasteners at a first circumferential end and the second circumferential fasteners at a second circumferential end, wherein the first circumferential fasteners of each arcuate element are suitable for the releasable connection with the second circumferential fasteners of another arcuate element, and vice versa. In another embodiment, at least some arcuate elements comprise the first circumferential fasteners at both the first and second circumferential ends and at least some arcuate elements comprise the second circumferential fasteners at both the first and second circumferential ends.

In an embodiment, the first circumferential fasteners comprise a cantilever snap-fit having a cantilever beam with a tapered hook, and the second circumferential fasteners comprise a circumferentially protruding wall having a slit, wherein the slit of the second circumferential fasteners is releasably engageable by the tapered hook of the first circumferential fasteners.

In an embodiment, the arcuate elements comprise circumferential holes allowing the access to the inside of the tubular main body for decoupling the first longitudinal fasteners and the second longitudinal fasteners, and/or for decoupling the first longitudinal fasteners and the first flange-fasteners, and/or for decoupling the second longitudinal fasteners and the second flange-fasteners, and/or for decoupling the first circumferential fasteners and the second circumferential fasteners.

In an embodiment, the cable reel is made of a plastic material, e.g. polypropylene.

### BRIEF DESCRIPTION OF THE DRAWINGS

Further characteristics and advantages will be more apparent from the following description of some embodiments given as a way of an example with reference to the enclosed drawings in which:
Figure 1 shows a perspective view of a cable reel in a working configuration according to an embodiment of the present invention;
Figure 2 shows an exploded perspective view of the cable reel shown in figure 1;
Figure 3a shows a perspective view of an arcuate element of the cable reel in figure 1, and figures 3b and 3c show enlarged details A and B of the same;
Figure 4a shows another perspective view of the arcuate element of the cable reel in figure 3a, and figure 4b shows an enlarged detail C of the same;
Figures 5a and 5b show perspective views respectively of the outer side and of the inner side of a first flange of the cable reel in figure 1, and figures 5c and 5d show enlarged details D and E of the same;
Figures 6a and 6b show a perspective and a side view respectively of the outer side and of the inner side of a second flange of the cable reel in figure 1, and figure 6c shows an enlarged detail F of the same;
Figure 7 shows a perspective view of the cable reel in figure 1 in a non-working configuration, and figures 7b and 7c show enlarged details G and H of the same.

### DETAILED DESCRIPTION

In the following description, same alphanumeric references are used for analogous exemplary elements when they are depicted in different drawings.

For the purpose of the present description and of the appended claims, the words "a" or "an" should be read to include one or at least one and the singular also includes the plural unless it is obvious that it is meant otherwise.

The present invention, in at least one of the aforementioned aspects, can be implemented according to one or more of the following embodiments, optionally combined together.

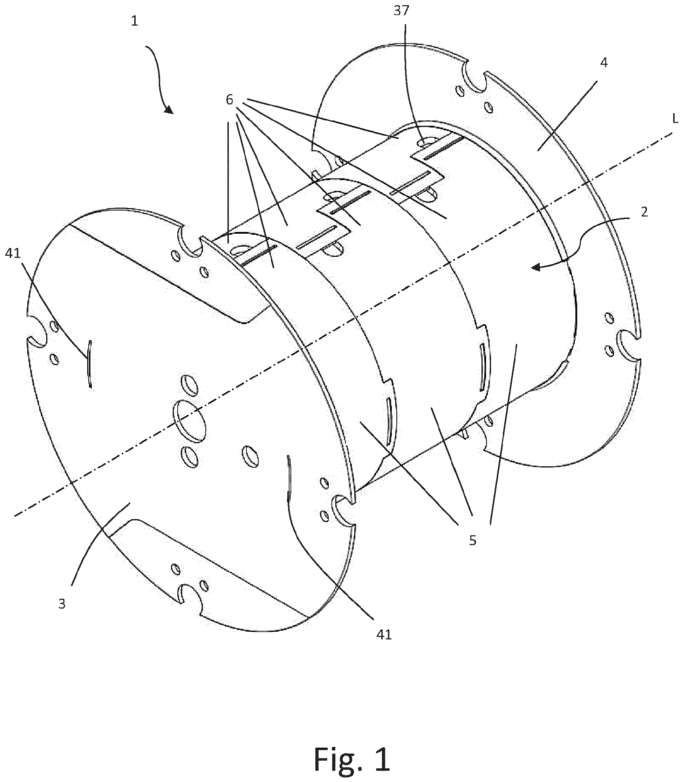

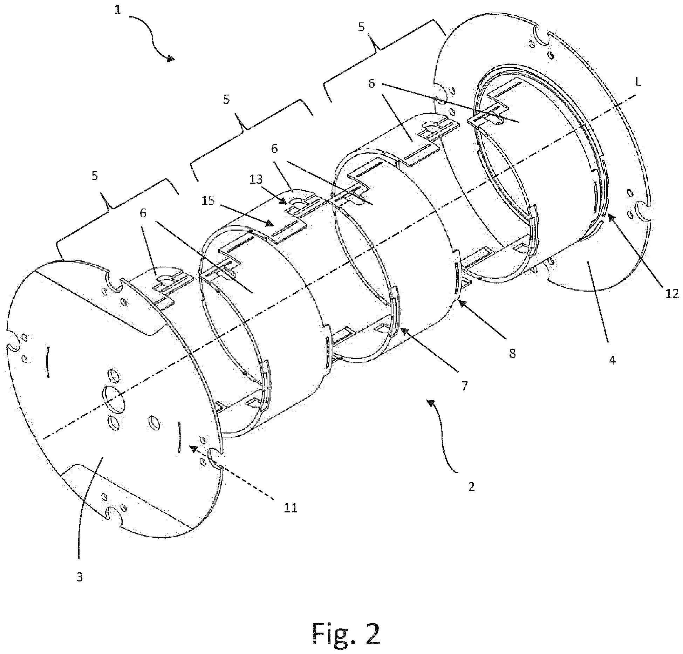

With reference to the attached Figures 1-2, a cable reel is indicated with reference 1. The cable reel 1 according to the embodiment depicted in figure 1 is in its working configuration. The reel 1 comprises a tubular main body 2 extending along a longitudinal axis L, and a first flange 3 and a second flange 4 at a first and a second end of the main body 2, respectively. A cable (not shown in the figures), such as a drop cable, can be wound on the main body 2 and the resulting wounded coil can be laterally kept in position on the main body 2 by the two flanges 3, 4. Preferably, the tubular main body 2 has a substantially circular cross section.

It is to be noted that in the present description and in the attached claims, unless differently specified, words such as "cross section", "radial", "axial", "circumferential", "longitudinal", "transversal", or the like are referred to the above-mentioned longitudinal axis L of the main body 2.

The main body 2 comprises a plurality of tubular sections 5, successively arranged side by side along the longitudinal axis L, which can be releasably interconnected one to another. The number of interconnected tubular sections 5 can be modified depending on the length of the cable to be wound on the reel 1. In this manner the reel 1 shows a first modularity along the longitudinal axis L. In some embodiments, as shown in the figures, all the tubular sections 5 have the same shape and the same dimensions, such that all the tubular sections 5 are interchangeable. In other words, they can be interconnected in any order to form the main body 2. All the tubular sections 5 are additionally releasably connectable to both the flanges 3 and 4, as will be described in more detail below.

Each tubular section 5 comprises in turn at least two arcuate elements 6 which are releasably interconnected in circumferential direction. Each tubular section 5 can be formed by exactly two half arcuate elements 6, as shown in the figures, which are circumferentially interconnectable at two ends thereof. This configuration of the arcuate elements 6 allows dismantling each tubular section 5 of the main body 2, thereby reducing the space occupied by the reel 1 when it is disassembled. In an embodiment, the arcuate elements 6 of the same tubular section 5 have the same shape and the same dimensions. Advantageously, all the arcuate elements 6 of all the tubular sections 5 forming the main body 2 are also stackable. This allows an easier packing of the disassembled reel 1 and a reduced amount of space needed, for example during transportation.

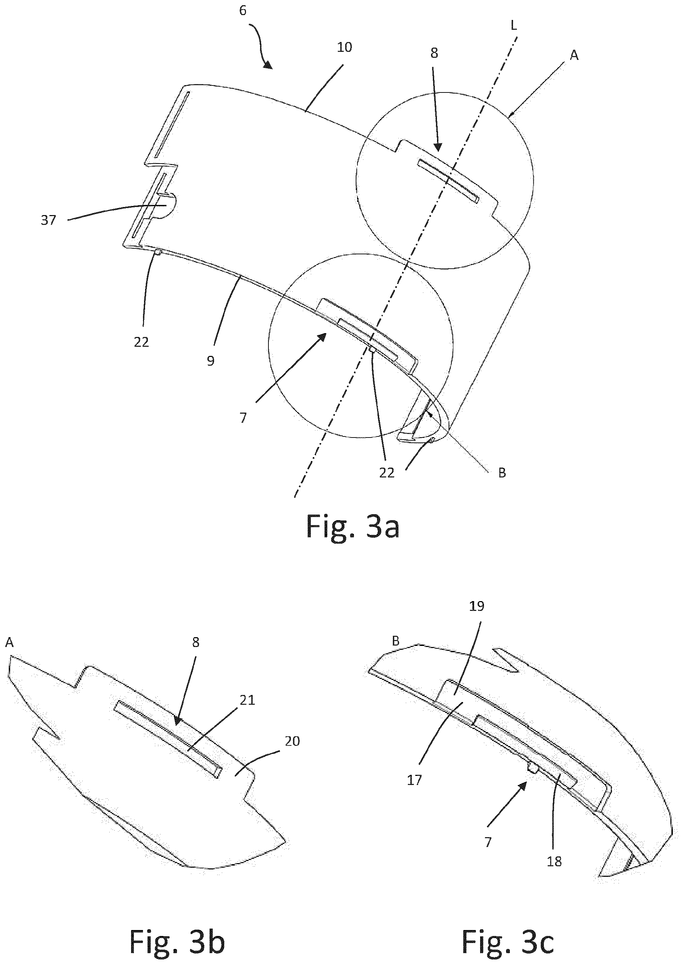

In an embodiment, the tubular sections 5 comprise first 7 and second 8 longitudinal fasteners allowing the releasable coupling of consecutive tubular sections 5 along the longitudinal axis L, wherein the first 7 and the second 8 longitudinal fasteners are different, i.e. differently shaped. In an embodiment, as shown for example in the figures 3a-3c, the first longitudinal fasteners 7 are positioned on a first longitudinal side 9 of each tubular section 5 and the second longitudinal fasteners 8 are positioned on a second longitudinal side 10 of each tubular section 5. In some embodiments, each arcuate element 6 comprises both the first 7 and the second 8 longitudinal fasteners.

In some embodiments, not shown in the figures, each tubular section 5 includes at least a first 7 and a second 8 longitudinal fastener on the first longitudinal side 9 and at least a first 7 and a second 8 longitudinal fasteners on the second longitudinal side 10.

Additionally, the first flange 3 and the second flange 4 comprise first flange-fasteners 11 and second flange-fasteners 12. In an embodiment, the first flange-fasteners 11 and the second flange-fasteners 12 are different, i.e. differently shaped.

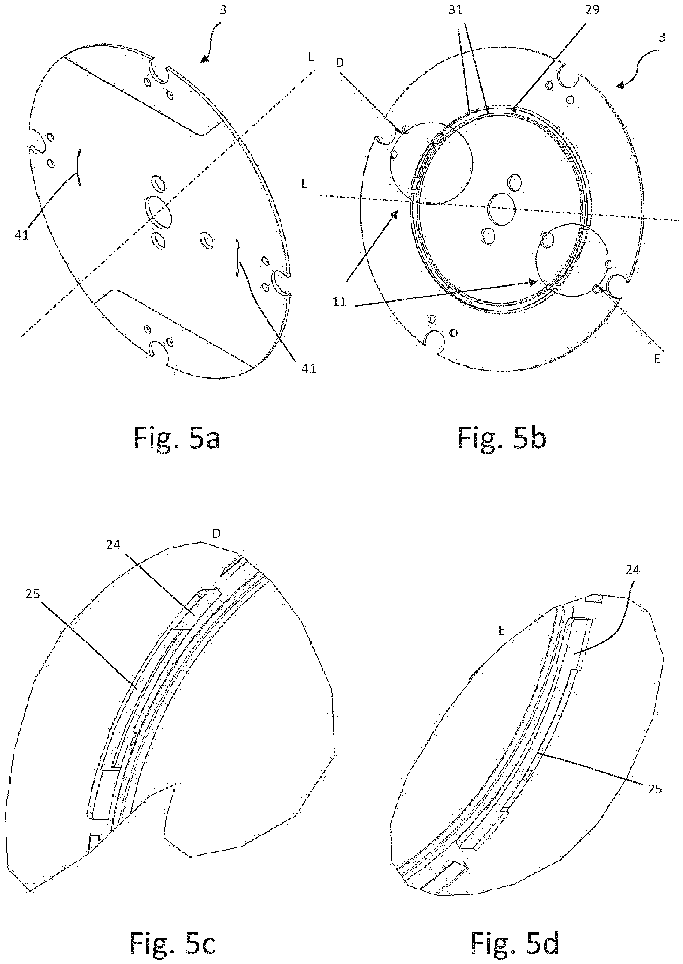

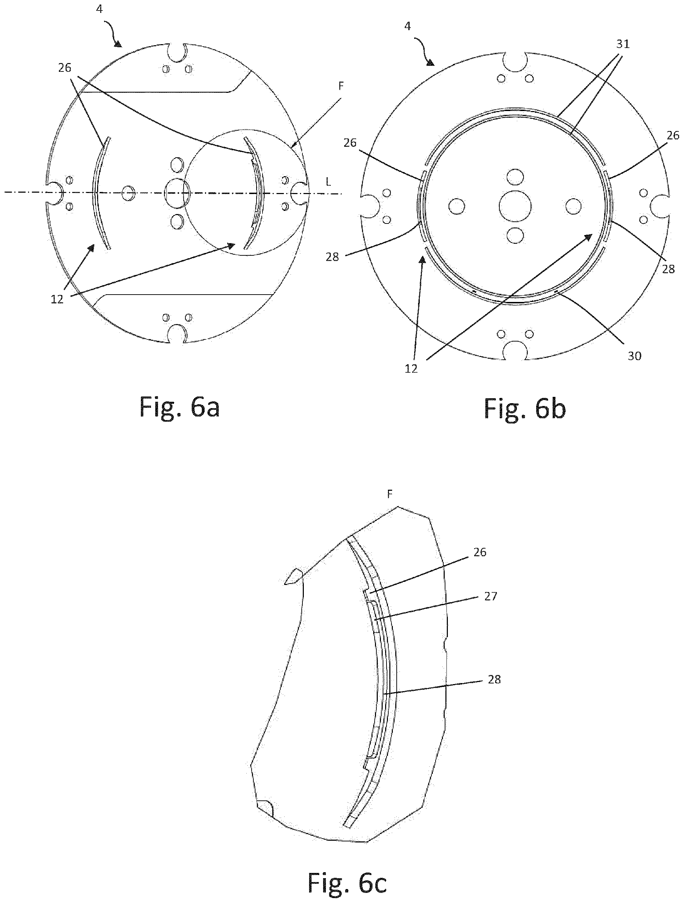

In an embodiment, as shown in the figures 5a-5d and 6a-6c, the first flange 3 comprises the first flange-fasteners 11 and the second flange 4 comprises the second flange-fasteners 12. In another embodiment, not shown in the figures, each of the first 3 and second 4 flange includes at least a first flange-fastener 11 and a second flange-fastener 12.

Advantageously, the first longitudinal fasteners 7 are suitable for the releasable connection with the second longitudinal fasteners 8 and with the first flange-fasteners 11, and the second longitudinal fasteners 8 are suitable for the releasable connection with the first longitudinal fasteners 7 and with the second flange-fasteners 12. Preferably, the first longitudinal fasteners 7 are unsuitable for the connection with the second flange-fasteners 12, and the second longitudinal fasteners 8 are unsuitable for the connection with the first flange-fasteners 11.

In an embodiment, the arcuate elements 6 comprise first circumferential fasteners 13 and second circumferential fasteners 15, wherein the first circumferential fasteners 13 are suitable for the releasable connection, in circumferential direction, with the second circumferential fasteners 15, and vice versa.

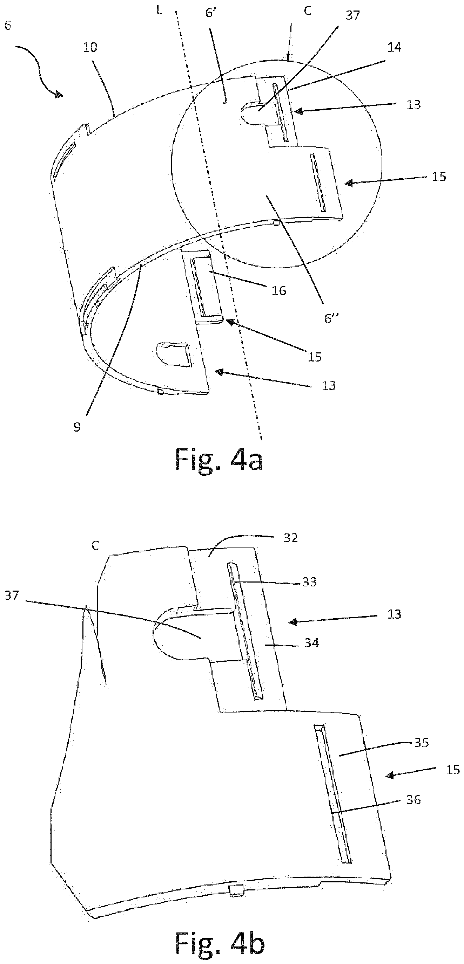

Referring now to the figures 4a-4b, in an embodiment, each arcuate element 6 of each tubular section 5 comprises the first circumferential fasteners 13 at a first circumferential end 14 and the second circumferential fasteners 15 at a second circumferential end 16, wherein the first circumferential fasteners 13 of each arcuate element 6 are suitable for the releasable connection with the second circumferential fasteners 15 of another arcuate element 6, and vice versa.

In another embodiment, at least some arcuate elements 6 comprise the first circumferential fasteners 13 at both the first and second circumferential ends 14, 16, and at least some arcuate elements 6 comprise the second circumferential fasteners 15 at both the first and second circumferential ends 14, 16.

In the following a description of possible embodiments of the above-mentioned fasteners will be given with reference to the embodiments shown in the attached figures. It is however to be noted that different reversible fasteners not explicitly described, such as screws or bolts, can be alternatively provided for all or some of the fasteners described.

In an embodiment, the first longitudinal fasteners 7 and the second longitudinal fasteners 8 of each tubular section 5, the first flange-fasteners 11 and the second flange-fasteners 12 comprise snap-fits.

Referring again to the figures 3a-3c, in an embodiment, the first longitudinal fasteners 7 of each tubular section 5, particularly of each arcuate element 6 of each main body 2 tubular section 5, comprise a cantilever snap-fit having a cantilever beam 17 with a tapered hook 18 at or near its end. The cantilever beam 17 develops longitudinally along the longitudinal axis L and circumferentially around the same forming an arc. The tapered hook 18 develops transversally to the longitudinal axis L at the first longitudinal side 9 of the arcuate element 6. Preferably, the cantilever beam 17 corresponds to a part of the arcuate element 6 where the wall forming the same has a reduced width in radial direction. The cantilever beam 17 is preferably both longitudinally and circumferentially shorter than the whole arcuate element 6. Preferably, the cantilever beam 17 is formed on the radially inner side of the arcuate element 6 and the tapered hook 18 protrudes radially outside from the cantilever beam 17. Alternatively, according to an embodiment not shown, the cantilever beam 17 can be formed on the radially outer side of the arcuate element 6 and the tapered hook 18 protrudes radially inside from the cantilever beam 17. Preferably, the tapered hook 18 is shorter than the cantilever beam 17 transversally to the longitudinal axis L. It is to be noted that the so formed cantilever snap-fit, particularly the reduced width cantilever beam 17, forms a coupling seat 19 useful for the fastening with tubular sections 5 as well as with the first flange 3, as will be described in more detail below.

In an embodiment, the second longitudinal fasteners 8 of each tubular section 5, particularly of each arcuate element 6 of each main body 2 tubular section 5, comprise an axially protruding wall 20 (which protrudes in longitudinal direction) having a transversal slit 21. Both the axially protruding wall 20 and the slit 21 develop circumferentially at the second longitudinal side 10 of the arcuate element 6. Preferably, the axially protruding wall 20 corresponds to a part of the arcuate element 6 where the wall forming the same has a reduced width. Preferably, the axially protruding wall 20 is externally flush with the wall forming the arcuate element 6. The axially protruding wall 20 is preferably both longitudinally and circumferentially shorter than the whole arcuate element. Preferably, the axially protruding wall 20 is formed on the radially outer side of the arcuate element 6. Alternatively, according to an embodiment not shown in the figures, the axially protruding wall 20 is formed on the radially inner side of the arcuate element 6. Preferably, the slit 21 is circumferentially shorter than the axially protruding wall 20.

The axially protruding wall 20 has preferably the same axial and circumferential dimensions as the cantilever beam 17, and the slit 21 has dimensions and a position on the axially protruding wall 20 suitable for the engagement by the tapered hook 18 on the cantilever beam 17. Particularly, during coupling of a first and a second consecutive tubular sections 5, the axially protruding wall 20 of a first tubular section slides longitudinally along the longitudinal axis L into the coupling seat 19 of a second tubular section. As a result, the tapered hook 18 of the first tubular section enters in contact with the axially protruding wall 20 of the second tubular section, thereby causing the bending of the cantilever beam 17 of the first tubular section until the tapered hook 18 of the first tubular section engages the slit 21 of the second tubular section, which causes the coupling of the two tubular sections. Preferably, the cantilever beam 17 and the axially protruding wall 20 widths are dimensioned such that, after coupling, the consecutive tubular sections are flush, thereby forming a substantially continuous main body 2 portion, as depicted for example in figure 1.

In an embodiment, in order to render the coupling of consecutive main body tubular sections 5 easier, each tubular section 5 comprises one or more axial pins 22 on one of the first 9 and the second 10 longitudinal side and corresponding one or more axial holes (not visible in the figures) on the other of the first 9 and the second 10 longitudinal side, positioned such that when the axial pins 22 of one tubular section 5 enters into the axial bores of another consecutive tubular section 5, the first longitudinal fasteners 7 of one tubular section and the second longitudinal fasteners 8 of the other tubular section are in the right relative position for the coupling.

With reference now to the Figures 5a-5d, the first flange-fasteners 11 can be embodied similarly to the second longitudinal fasteners 8 of the main body tubular sections 5. In particular, in an embodiment, the first flange-fasteners 11 comprise an axially protruding wall 24 with a transversal slit 25 developing circumferentially at one side of the first flange 3, preferably the inner side (i.e. the side facing the main body 2 when the reel 1 is in the working configuration). Preferably, the slit 25 is circumferentially shorter than the axially protruding wall 24. The axially protruding wall 24 has preferably the same axial and circumferential dimensions of the cantilever beam 17 of the first longitudinal fasteners 7 and the slit 25 has preferably the same axial and circumferential dimensions of the tapered hook 18 of the first longitudinal fasteners 7. Additionally, the slit 25 is positioned on the axially protruding wall 24 so to be engageable by the tapered hook 18 on the cantilever beam 17 of the first longitudinal fasteners 7. Particularly, during coupling of the first flange 3 with a main body 2 tubular section 5, the axially protruding wall 24 slides longitudinally along the longitudinal axis L into the coupling seat 19 of the tubular section 5. As a result, the tapered hook 18, radially protruding outside (or inside) the cantilever beam 17, enters in contact with the radially inner (or outer) side of the axially protruding wall 24, thereby causing the bending of the cantilever beam 17 until the tapered hook 18 engages the slit 25, which causes the coupling. Preferably, the cantilever beam 17 and the axially protruding wall 24 widths are dimensioned such that, after coupling, the axially protruding wall 24 is flush with the coupled main body tubular section.

With reference now to the Figures 6a-6c, in an embodiment, the second flange-fasteners 12 comprise a circumferential slit 26 in the second flange 4 where the axially protruding wall 20 of the second longitudinal fasteners 8 can be inserted. It is to be noted that, advantageously, the axially protruding wall 20 of the second longitudinal fasteners 8 is axially long enough to axially protrude from the outer side (i.e., the side opposite to the inner side facing the main body 2) of the second flange 4 once inserted into the circumferential slit 26, such that the slit 21 of the second longitudinal fasteners 8 is accessible preferably on the inner side of the second flange 4. The second flange-fasteners 12 in turn comprise a cantilever snap-fit having a cantilever beam 27 with a tapered hook 28 near or at its end. The cantilever beam 27 develops longitudinally along the longitudinal axis L, preferably on the second flange 4 inner side, and circumferentially around the same longitudinal axis L forming an arc. The tapered hook 28 develops transversally to the longitudinal axis L. Preferably, the cantilever beam 27 is formed on the radially inner side of the circumferential slit 26 and the tapered hook 28 protrudes radially outside from the cantilever beam 27 (or vice versa). In this manner, once the axially protruding wall 20 of the second longitudinal fasteners 8 is fully inserted into the circumferential slit 26, the hook 28 engages the slit 21 of the second longitudinal fasteners 8 thereby coupling a main body tubular section 5 with the second flange 4.

In an embodiment, the first 3 and the second 4 flanges comprise axial holes 29/pins 30 couplable with the axial pins 22/holes of the main body tubular sections 5.

In an embodiment, the first 3 and/or the second 4 flanges comprise in their inner sides a couple of axially protruding annular walls 31, forming an annular space for the insertion of the nearest main body tubular sections 5 on the first longitudinal side 9 (in the first flange 3) or in the second longitudinal side 10 (in the second flange 4). The annular walls 31 can be useful also when the reel is in a non-working configuration, as will be described later.

With reference now to the first 13 and the second 15 circumferential fasteners, turning back to figures 4a-4b, in an embodiment they comprise snap-fits, too.

In an embodiment, the first circumferential fasteners 15 of each arcuate element 6 of each main body 2 tubular section 5 comprise a cantilever snap-fit having a cantilever beam 32 with a tapered hook 33 at or near its end. The cantilever beam 32 protrudes circumferentially at the first circumferential end 14 of the arcuate element 6 and the tapered hook 33 develops transversally to the circumferential direction. In some embodiments, the cantilever beam 32 corresponds to a part of the arcuate element 6 where the wall forming the same has a reduced width. Preferably, the cantilever beam 32 is formed on the radially inner side of the arcuate element 6 and the tapered hook 33 protrudes radially outside from the cantilever beam 32 (or vice versa). Preferably, the cantilever beam 32 is larger than the tapered hook 33. The so formed cantilever snap-fit, particularly the reduced width cantilever beam 32, forms a coupling seat 34 useful for the coupling in circumferential direction with another consecutive arcuate element 6, as will be described in more detail below.

In an embodiment, the second circumferential fasteners 15 of each arcuate element 6 of each main body 2 tubular section 5 comprise a circumferentially protruding wall 35 having a transversal slit 36. In some embodiments, the circumferentially protruding wall 35 corresponds to a part of the arcuate element 6 where the wall forming the same has a reduced width. Preferably, the circumferentially protruding wall 35 is formed on the radially outer (or inner) side of the arcuate element 6.

The circumferentially protruding wall 35 has preferably the same axial and circumferential dimensions as the cantilever beam 32, and the slit 36 has the same axial and circumferential dimensions of the tapered hook 33. Additionally, the slit 36 is positioned on the circumferentially protruding 35 wall so to be engageable by the tapered hook 33 on the cantilever beam 32. Particularly, during the circumferential coupling of two consecutive arcuate elements 6, the circumferentially protruding wall 35 of the first arcuate element slides into the coupling seat 34 of the second arcuate element. As a result, the tapered hook 33 of the first arcuate element enters in contact with the circumferentially protruding wall 32 of the second arcuate element, thereby causing the bending of the cantilever beam 32 until the tapered hook 33 engages the slit 36, which causes the coupling. Preferably, the cantilever beam 32 and the circumferentially protruding wall 33 widths are dimensioned such that, after coupling, the coupled consecutive arcuate elements are flush, as depicted for example in figure 1.

It is to be noted that, in an embodiment, each arcuate element 6 comprises at least two modules 6', 6" axially arranged side by side, such that on both the first 14 and the second 16 circumferential ends of the arcuate element, the first module 6' comprises the first circumferential fasteners 13 and the second module 6" comprises the second circumferential fasteners 15. In an embodiment, the first 13 and the second 15 circumferential fasteners on the same circumferential end are circumferentially offset. The first 6' and the second 6" modules are preferably formed in one piece, i.e. the arcuate element 6 comprising the modules 6' and 6" is formed in one single piece.

In an embodiment, the arcuate elements 6 comprise circumferential holes 37 formed near the fasteners, in particular near the snap-fits, allowing an easy decoupling of the same by the user. The circumferential holes 37 allows the user to have access to the inside of the tubular main body 2 when the tubular sections 5 and the arcuate elements 6 are connected so to easily decouple them by disengaging the tapered hooks 18 and the slits 21.

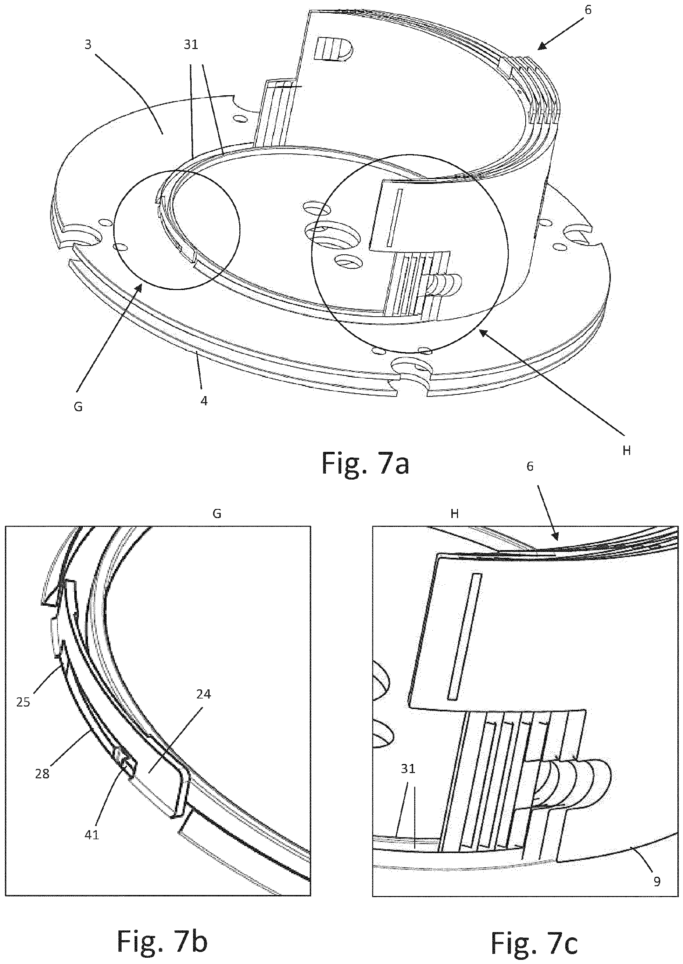

When the reel 1 is not in use (non-working configuration), the arcuate elements 6 and the flanges 2, 3 can be interconnected in a different way in order to save space, e.g. during transportation. An example of a possible non-working configuration is depicted in the figures 7a-7c (vs. the working configuration depicted in the figure 1).

In particular, in the non-working configuration the cantilever beam 27 on the inner side of the second flange 4 can be inserted through auxiliary circumferential slits 41 formed in the first flange 3 (to this regard, see also the figure 1 and the figures 5a-5d) from the outer side of the latter until the hook 28 of the second flange 4 engages the transversal slit 25 on the axially protruding wall 24 of the first flange 3, with the inner side of the second flange 4 facing the outer side of the first flange 3. This allows releasably interconnecting the first 3 and the second 4 flanges together. Then, all the main body arcuate elements 6 can be stacked and positioned onto the first flange 3 on the inner side thereof. Particularly, at least some of the stacked arcuate elements 6 can be inserted at their first longitudinal sided 9 in the annular space formed by the couple of axially protruding annular walls 31 on the inner side of the first flange 3.

The reel 1, including the main body 2 and the flanges 3, 4, as well as all the fasteners, can be made of a plastic material, such as polypropylene.

## Claims

1. Cable reel (1) comprising:
- a tubular main body (2) extending along a longitudinal axis (L), comprising a plurality of tubular sections (5) successively arranged side by side along the longitudinal axis (L) and releasably interconnected one to another;
- a first flange (3) positioned at a first end of the main body (2), releasably connected to a first tubular section of the plurality of tubular sections (5);
- a second flange (4) positioned at a second end of the main body (2), releasably connected to a last tubular section of the plurality of tubular sections (5),
**characterized in that** each tubular section (5) comprises at least two arcuate elements (6) releasably interconnected in circumferential direction.

2. The cable reel (1) of claim 1, wherein all the arcuate elements (6) of all the tubular sections (5) have the same shape and the same dimension and are stackable.

3. The cable reel (1) of claim 1 or 2, wherein:
- the tubular sections (5) comprise first longitudinal fasteners (7) and second longitudinal fasteners (8), the first (7) and the second (8) longitudinal fasteners being differently shaped;
- the first flange (3) and the second flange (4) comprise first flange-fasteners (11) and second flange-fasteners (12), the first flange-fasteners (11) and the second flange-fasteners (12) being differently shaped,
wherein the first longitudinal fasteners (7) are suitable for the releasable connection in longitudinal direction with the second longitudinal fasteners (8) and with the first flange-fasteners (11), and the second longitudinal fasteners (8) are suitable for the releasable connection in longitudinal direction with the first longitudinal fasteners (7) and with the second flange-fasteners (12),
wherein the first longitudinal fasteners (7) are unsuitable for the connection with the second flange-fasteners (12), and the second longitudinal fasteners (8) are unsuitable for the connection with the first flange-fasteners (11).

4. The cable reel (1) of claim 3, wherein the first longitudinal fasteners (7) and the second longitudinal fasteners (8), the first flange-fasteners (11) and the second flange-fasteners (12) comprise snap-fits.

5. The cable reel (1) of claim 4, wherein the first longitudinal fasteners (7) comprise a cantilever snap-fit having a cantilever beam (17) with a tapered hook (18), and the second longitudinal fasteners (8) comprise an axially protruding wall (20) having a slit (21), wherein the slit (21) of the second longitudinal fasteners (8) is releasably engageable by the tapered hook (18) of the first longitudinal fasteners (7).

6. The cable reel (1) of claim 5, wherein the first flange-fasteners (11) comprise an axially protruding wall (24) having a slit (25), wherein the slit (25) of the first flange-fasteners (11) is releasably engageable by the tapered hook (18) of the first longitudinal fasteners (7).

7. The cable reel (1) of claim 5 or 6, wherein the second flange-fasteners (12) comprise a circumferential slit (26), where the axially protruding wall (20) of the second longitudinal fasteners (8) is insertable, and a cantilever snap-fit having a cantilever beam (27) with a tapered hook (28), wherein the slit (21) of the second longitudinal fasteners (8) is releasably engageable by the tapered hook (28) of the second flange-fasteners (12).

8. The cable reel (1) of any of claims 1-7, wherein the first (3) and the second (4) flanges are reversibly couplable in a non-working configuration.

9. The cable reel (1) of claims 6-8, wherein the first flange (3) comprises auxiliary slits (41) where the cantilever beam (27) of the second flange-fasteners (12) can be inserted from the outer side of the first flange (3) such that the hook (28) of the second flange-fasteners (12) engages the slit (25) of the first flange-fasteners (11) for reversibly coupling the first (3) and the second (4) flanges in the non-working configuration.

10. The cable reel (1) of claim 8 or 9, wherein the first (3) and/or the second (4) flanges comprise on their inner side an annular space for the insertion of the nearest main body tubular section (5) of the plurality of tubular sections, wherein the annular space is further suitable for the insertion of stacked arcuate elements (6) in the non-working configuration.

11. The cable reel (1) of any of claims 1-10, wherein each tubular section (5) comprises one or more axial pins (22) on one longitudinal side and one or more axial holes on the other longitudinal side, wherein the axial pins (22) are reversibly insertable into the axial holes, and the first (3) and the second (4) flanges comprise axial holes (29)/axial pins (30) reversibly couplable with the axial pins (22)/axial holes of the main body tubular sections (5).

12. The cable reel (1) of any of claims 1-11, wherein the arcuate elements (6) comprise first circumferential fasteners (13) and second circumferential fasteners (15), wherein the first circumferential fasteners (13) and the second circumferential fasteners (15) are suitable for the releasable interconnection in circumferential direction, wherein the first (13) and the second (15) circumferential fasteners comprise snap-fits.

13. The cable reel (1) of claim 12, wherein the first circumferential fasteners (13) comprise a cantilever snap-fit having a cantilever beam (32) with a tapered hook (33), and the second circumferential fasteners (15) comprise a circumferentially protruding wall (35) having a slit (36), wherein the slit (36) of the second circumferential fasteners (15) is releasably engageable by the tapered hook (33) of the first circumferential fasteners (15).

14. The cable reel (1) of any of claims 3-13, wherein the arcuate elements (6) comprise circumferential holes (37) allowing the access to the inside of the tubular main body (2) for decoupling the first longitudinal fasteners (7) and the second longitudinal fasteners (8), and/or for decoupling the first longitudinal fasteners (7) and the first flange-fasteners (11), and/or for decoupling the second longitudinal fasteners (8) and the second flange-fasteners (12), and/or for decoupling the first circumferential fasteners (13) and the second circumferential fasteners (15).

15. The cable reel (1) of any of claims 1-14, made of a plastic material.

## Patentansprüche

1. Kabeltrommel (1) mit:
Einem rohrförmigen Hauptkörper (2), der sich entlang einer Längsachse (L) erstreckt und eine Vielzahl von rohrförmigen Abschnitten (5) umfasst, die entlang der Längsachse (L) nacheinander nebeneinander angeordnet und lösbar miteinander verbunden sind;
einem ersten Flansch (3), der an einem ersten Ende des Hauptkörpers (2) positioniert und lösbar mit einem ersten rohrförmigen Abschnitt der Vielzahl von rohrförmigen Abschnitten (5) verbunden ist; einem zweiten Flansch (4), der an einem zweiten Ende des Hauptkörpers (2) angeordnet und lösbar mit einem letzten rohrförmigen Abschnitt der Vielzahl von rohrförmigen Abschnitten (5) verbunden ist, **dadurch gekennzeichnet, dass** jeder rohrförmige Abschnitt (5) mindestens zwei bogenförmige Elemente (6) umfasst, die in Umfangsrichtung lösbar miteinander verbunden sind.

2. Kabeltrommel (1) nach Anspruch 1, wobei alle bogenförmigen Elemente (6) aller rohrförmigen Abschnitte (5) die gleiche Form und die gleiche Abmessung haben und stapelbar sind.

3. Kabeltrommel (1) nach Anspruch 1 oder 2, wobei:
- die Rohrabschnitte (5) erste Längsverschlüsse (7) und zweite Längsverschlüsse (8) aufweisen, wobei die ersten (7) und die zweiten (8) Längsverschlüsse unterschiedlich geformt sind;
- der erste Flansch (3) und der zweite Flansch (4) erste Flanschverschlüsse (11) und zweite Flanschverschlüsse (12) umfassen, wobei die ersten Flanschverschlüsse (11) und die zweiten Flanschverschlüsse (12) unterschiedlich geformt sind, wobei die ersten Längsverschlüsse (7) zur lösbaren Verbindung in Längsrichtung mit den zweiten Längsverschlüssen (8) und mit den ersten Flanschverschlüssen (11) geeignet sind, und die zweiten Längsverschlüsse (8) zur lösbaren Verbindung in Längsrichtung mit den ersten Längsverschlüssen (7) und mit den zweiten Flanschverschlüssen (12) geeignet sind,
wobei die ersten Längsverschlüsse (7) für die Verbindung mit den zweiten Flanschverschlüssen (12) ungeeignet sind, und die zweiten Längsverschlüsse (8) für die Verbindung mit den ersten Flanschverschlüsse (11) ungeeignet sind.

4. Kabeltrommel (1) nach Anspruch 3, wobei die ersten Längsverschlüsse (7) und die zweiten Längsverschlüsse (8), die ersten Flanschverschlüsse (11) und die zweiten Flanschverschlüsse (12) Schnappverschlüsse umfassen.

5. Kabeltrommel (1) nach Anspruch 4, wobei die ersten Längsverschlüsse (7) einen freitragenden Schnappverschluss umfassen, der einen freitragenden Balken (17) mit einem konischen Haken (18) aufweist, und die zweiten Längsverschlüsse (8) eine axial vorstehende Wand (20) mit einem Schlitz (21) umfassen, wobei der Schlitz (21) der zweiten Längsverschlüsse (8) lösbar mit dem konischen Haken (18) der ersten Längsverschlüsse (7) ist.

6. Kabeltrommel (1) nach Anspruch 5, wobei die ersten Flanschverschlüsse (11) eine axial vorstehende Wand (24) mit einem Schlitz (25) aufweisen, wobei der Schlitz (25) der ersten Flanschverschlüsse (11) mit dem konischen Haken (18) der ersten Längsverschlüsse (7) lösbar in Eingriff bringbar ist.

7. Kabeltrommel (1) nach Anspruch 5 oder 6, wobei die zweiten Flanschverschlüsse (12) einen umlaufenden Schlitz (26), in den die axial vorstehende Wand (20) der zweiten Längsverschlüsse (8) einführbar ist, und einen freitragenden Schnappverschluss mit einem freitragenden Träger (27) mit einem konischen Haken (28) aufweisen, wobei der Schlitz (21) der zweiten Längsverschlüsse (8) mit dem konischen Haken (28) der zweiten Flanschverschlüsse (12) lösbar in Eingriff bringbar ist.

8. Kabeltrommel (1) nach einem der Ansprüche 1 bis 7, wobei der erste (3) und der zweite (4) Flansch in einer Nichtbetriebskonfiguration reversibel koppelbar sind.

9. Kabeltrommel (1) nach einem der Ansprüche 6 bis 8, wobei der erste Flansch (3) Hilfsschlitze (41) aufweist, in die der freitragende Träger (27) der zweiten Flanschverschlüsse (12) von der Außenseite des ersten Flansches (3) aus eingeführt werden kann, so dass der Haken (28) des zweiten Flanschverschluss (12) in den Schlitz (25) des ersten Flanschverschluss (11) eingreift, um den ersten (3) und den zweiten (4) Flansch in der Nicht-Arbeitskonfiguration reversibel zu verbinden.

10. Kabeltrommel (1) nach Anspruch 8 oder 9, wobei der erste (3) und/oder der zweite (4) Flansch an ihrer Innenseite einen ringförmigen Raum für das Einsetzen des nächstgelegenen rohrförmigen Hauptkörperabschnitts (5) der Vielzahl von rohrförmigen Abschnitten aufweisen, wobei der ringförmige Raum ferner für das Einsetzen von gestapelten bogenförmigen Elementen (6) in der Nicht-Arbeitskonfiguration geeignet ist.

11. Kabeltrommel (1) nach einem der Ansprüche 1 bis 10, wobei jeder rohrförmige Abschnitt (5) einen oder mehrere axiale Stifte (22) an einer Längsseite und ein oder mehrere axiale Löcher an der anderen Längsseite aufweist, wobei die axialen Stifte (22) reversibel in die axialen Löcher einführbar sind und der erste (3) und der zweite (4) Flansch axiale Löcher (29)/axiale Stifte (30) aufweisen, die reversibel mit den axialen Stiften (22)/axialen Löchern der rohrförmigen Hauptkörperabschnitte (5) koppelbar sind.

12. Kabeltrommel (1) nach einem der Ansprüche 1 bis 11, wobei die bogenförmigen Elemente (6) erste Umfangsbefestigungselemente (13) und zweite Umfangsbefestigungselemente (15) umfassen, wobei die ersten Umfangsbefestigungselemente (13) und die zweiten Umfangsbefestigungselemente (15) für die lösbare Verbindung in Umfangsrichtung geeignet sind, wobei die ersten (13) und die zweiten (15) Umfangsbefestigungselemente Schnappverschlüsse umfassen.

13. Kabeltrommel (1) nach Anspruch 12, wobei die ersten Umfangsverschlüsse (13) einen freitragenden Schnappverschluss mit einem freitragenden Balken (32) mit einem konischen Haken (33) umfassen und die zweiten Umfangsverschlüsse (15) eine in Umfangsrichtung vorstehende Wand (35) mit einem Schlitz (36) umfassen, wobei der Schlitz (36) der zweiten Umfangsverschlüsse (15) lösbar mit dem konischen Haken (33) der ersten Umfangsverschlüsse (15) in Eingriff gebracht werden kann.

14. Kabeltrommel (1) nach einem der Ansprüche 3 bis 13, wobei die bogenförmigen Elemente (6) umlaufende Löcher (37) aufweisen, die den Zugang zum Inneren des rohrförmigen Hauptkörpers (2) zum Entkoppeln der ersten Längsverschlüsse (7) und der zweiten Längsverschlüsse (8) ermöglichen, und/oder zum Entkoppeln der ersten Längsverschlüsse (7) und der ersten Flanschverschlüsse (11), und/oder zum Entkoppeln der zweiten Längsverschlüsse (8) und der zweiten Flanschverschlüsse (12), und/oder zum Entkoppeln der ersten Umfangsverschlüsse (13) und der zweiten Umfangsverschlüsse (15).

15. Kabeltrommel (1) nach einem der Ansprüche 1 bis 14, hergestellt aus einem Kunststoffmaterial.

## Revendications

1. Bobine de câble (1) comprenant :
- un corps principal (2) tubulaire s'étendant le long d'un axe longitudinal (L), comprenant une pluralité de sections tubulaires (5) successivement agencées côte à côte le long de l'axe longitudinal (L) et reliées de manière libérable les unes aux autres ;
- une première collerette (3) positionnée à une première extrémité du corps principal (2), reliée de manière libérable à une première section tubulaire de la pluralité de sections tubulaires (5) ;
- une deuxième collerette (4) positionnée à une deuxième extrémité du corps principal (2), reliée de manière libérable à une dernière section tubulaire de la pluralité de sections tubulaires (5),
**caractérisée en ce que**
chaque section tubulaire (5) comprend au moins deux éléments arqués (6) reliés de manière libérable dans la direction circonférentielle.

2. Bobine de câble (1) selon la revendication 1, dans laquelle tous les éléments arqués (6) de toutes les sections tubulaires (5) possèdent la même forme et la même dimension et sont empilables.

3. Bobine de câble (1) selon la revendication 1 ou 2, dans laquelle :
- les sections tubulaires (5) comprennent des premières attaches longitudinales (7) et des deuxièmes attaches longitudinales (8), les premières (7) et les deuxièmes (8) attaches longitudinales étant différemment façonnées ;
- la première collerette (3) et la deuxième collerette (4) comprennent des premières attaches de collerette (11) et des deuxièmes attaches de collerette (12), les premières attaches de collerette (11) et les deuxièmes attaches de collerette (12) étant différemment façonnées,
dans laquelle les premières attaches longitudinales (7) sont appropriées pour la liaison libérable dans la direction longitudinale avec les deuxièmes attaches longitudinales (8) et avec les premières attaches de collerette (11), et les deuxièmes attaches longitudinales (8) sont appropriées pour la liaison libérable dans la direction longitudinale avec les premières attaches longitudinales (7) et avec les deuxièmes attaches de collerette (12),
dans laquelle les premières attaches longitudinales (7) sont inappropriées pour la liaison avec les deuxièmes attaches de collerette (12), et les deuxièmes attaches longitudinales (8) sont inappropriées pour la liaison avec les premières attaches de collerette (11).

4. Bobine de câble (1) selon la revendication 3, dans laquelle les premières attaches longitudinales (7) et les deuxièmes attaches longitudinales (8), les premières attaches de collerette (11) et les deuxièmes attaches de collerette (12) comprennent des fixations par encliquetage.

5. Bobine de câble (1) selon la revendication 4, dans laquelle les premières attaches longitudinales (7) comprennent une fixation par encliquetage en porte-à-faux ayant une poutre en porte-à-faux (17) dotée d'un crochet effilé (18), et les deuxièmes attaches longitudinales (8) comprennent une paroi faisant saillie de manière axiale (20) ayant une fente (21), dans laquelle la fente (21) des deuxièmes attaches longitudinales (8) est apte à être mise en prise de manière libérable par le crochet effilé (18) des premières attaches longitudinales (7).

6. Bobine de câble (1) selon la revendication 5, dans laquelle les premières attaches de collerette (11) comprennent une paroi faisant saillie de manière axiale (24) ayant une fente (25), dans laquelle la fente (25) des premières attaches de collerette (11) est apte à être mise en prise de manière libérable par le crochet effilé (18) des premières attaches longitudinales (7).

7. Bobine de câble (1) selon la revendication 5 ou 6, dans laquelle les deuxièmes attaches de collerette (12) comprennent une fente circonférentielle (26), où la paroi faisant saillie de manière axiale (20) des deuxièmes attaches longitudinales (8) est apte à être insérée, et une fixation par encliquetage en porte-à-faux ayant une poutre en porte-à-faux (27) dotée d'un crochet effilé (28), dans laquelle la fente (21) des deuxièmes attaches longitudinales (8) est apte à être mise en prise de manière libérable par le crochet effilé (28) des deuxièmes attaches de collerette (12).

8. Bobine de câble (1) selon l'une quelconque des revendications 1-7, dans laquelle la première (3) et la deuxième (4) collerettes sont aptes à être couplées de manière réversible dans une configuration inactive.

9. Bobine de câble (1) selon les revendications 6-8, dans laquelle la première collerette (3) comprend des fentes auxiliaires (41) où la poutre en porte-à-faux (27) des deuxièmes attaches de collerette (12) peut être insérée par le côté externe de la première collerette (3) de sorte que le crochet (28) des deuxièmes attaches de collerette (12) se mette en prise avec la fente (25) des premières attaches de collerette (11) pour le couplage de manière réversible des première (3) et deuxième (4) collerette dans la configuration non-opérationnelle.

10. Bobine de câble (1) selon la revendication 8 ou 9, dans laquelle la première (3) et/ou la deuxième (4) collerette comprennent, sur leur côté interne, un espace annulaire pour l'insertion de la section tubulaire (5) de corps principal la plus proche parmi la pluralité de sections tubulaires, dans laquelle l'espace annulaire est en outre approprié pour l'insertion d'éléments arqués (6) empilés dans la configuration non-opérationnelle.

11. Bobine de câble (1) selon l'une quelconque des revendications 1-10, dans laquelle chaque section tubulaire (5) comprend une ou plusieurs goupilles axiales (22) sur un côté longitudinal et un ou plusieurs trous axiaux sur l'autre côté longitudinal, dans laquelle les goupilles axiales (22) sont aptes à être insérées de manière réversible dans les trous axiaux, et la première (3) et la deuxième (4) collerette comprennent des trous axiaux (29)/goupilles axiales (30) aptes à être couplé(e)s de manière réversible avec les goupilles axiales (22)/trous axiaux des sections tubulaires (5) de corps principal.

12. Bobine de câble (1) selon l'une quelconque des revendications 1-11, dans laquelle les éléments arqués (6) comprennent des premières attaches circonférentielles (13) et des deuxièmes attaches circonférentielles (15), dans laquelle les premières attaches circonférentielles (13) et les deuxièmes attaches circonférentielles (15) sont appropriées pour la liaison libérable dans la direction circonférentielle, dans laquelle les première (13) et deuxième (15) attaches circonférentielles comprennent des fixations par encliquetage.

13. Bobine de câble (1) selon la revendication 12, dans laquelle les premières attaches circonférentielles (13) comprennent une fixation par encliquetage en porte-à-faux ayant une poutre en porte-à-faux (32) dotée d'un crochet effilé (33), et les deuxièmes attaches circonférentielles (15) comprennent une paroi faisant saillie de manière circonférentielle (35) ayant une fente (36), dans laquelle la fente (36) des deuxièmes attaches circonférentielles (15) est apte à être mise en prise de manière libérable par le crochet effilé (33) des premières attaches circonférentielles (15).

14. Bobine de câble (1) selon l'une quelconque des revendications 3-13, dans laquelle les éléments arqués (6) comprennent des trous circonférentiels (37) permettant l'accès à l'intérieur du corps principal (2) tubulaire pour le découplage des premières attaches longitudinales (7) et des deuxièmes attaches longitudinales (8), et/ou pour le découplage des premières attaches longitudinales (7) et des premières attaches de collerette (11), et/ou pour le découplage des deuxièmes attaches longitudinales (8) et des deuxièmes attaches de collerette (12), et/ou pour le découplage des premières attaches circonférentielles (13) et des deuxièmes attaches circonférentielles (15).

15. Bobine de câble (1) selon l'une quelconque des revendications 1-14, constituée d'une matière plastique.
